# EUROPEAN PATENT APPLICATION

(11) **EP 2 818 761 A1**
(43) Date of publication of application: **31.12.2014**
(21) Application number: 14173617.3
(22) Date of filing: 24.06.2014
(51) Int. Cl.: F16H 59/02, F16H 59/10

(54) **Automatic transmission shifter**

(30) Priority: 26.06.2013 JP 2013133597
(71) Applicant: Delta Kogyo Co., Ltd., Aki-gun, Hiroshima (JP)
(72) Inventor: Yamamoto, Ichiro, Hiroshima (JP); Shiwa, Yuji, Hiroshima (JP); Obata, Tetsuya, Hiroshima (JP)
(74) Representative: Rupprecht, Kay

(57) **Abstract**

Disclosed is an automatic transmission shifter which comprises an automatic transmission-manipulating member coupled to an automatic transmission, and a shift lever having a manipulating member-coupling portion. The automatic transmission-manipulating member comprises a receiving section movably receiving therein the manipulating member-coupling portion. The receiving section has a peripheral wall formed to surround the manipulating member-coupling portion around the entire circumference thereof, wherein an inner periphery of the peripheral wall comprises a lever-coupling portion configured to be coupled and decoupled with respect to the manipulating member-coupling portion.

## Description

### TECHNICAL FIELD

The present invention relates to a shifter for an automatic transmission usable in a vehicle such as an automotive vehicle.

### BACKGROUND ART

Heretofore, there has been known an automatic transmission shifter capable of switching between an automatic shift mode and a manual shift mode. For example, this type of automatic transmission shifter comprises a shifter body having an automatic transmission-manipulating member coupled to an automatic transmission, and a shift lever capable of being coupled and decoupled with respect to the automatic transmission-manipulating member, wherein the shifter is configured such that, when the shift lever is positioned in an automatic-shift-mode gate provided in the shifter body, the shift lever and the automatic transmission-manipulating member are coupled together to establish the automatic shift mode, and, when the shift lever is positioned in a manual-shift-mode gate provided in the shifter body, the shift lever and the automatic transmission-manipulating member are decoupled from each other to establish the manual shift mode.

In regard to the automatic transmission shifter capable of switching between the automatic shift mode and the manual shift mode, for example, JP 11-321368A discloses a mechanism in which an angular-C shaped concave portion serving as a lever-coupling portion is formed in the automatic transmission-manipulating member, and a quadrangular prism-shaped manipulation member-coupling portion is provided on a right side of a lever shaft body of the shift lever in spaced-apart relation to the lever shaft body through an extension piece, wherein the mechanism is configured such that, when the shift lever is positioned in the automatic-shift-mode gate, the manipulation member-coupling portion is fittingly inserted into the concave portion of the automatic transmission-manipulating member so as to establish coupling between the automatic transmission-manipulating member and the shift lever, and, when the shift lever is manually tilted from a drive range in a select direction and positioned in the manual-shift-mode gate, the manipulation member-coupling portion is moved out of the concave portion of the automatic transmission-manipulating member so as to release the coupling between automatic transmission-manipulating member and the shift lever.

However, in the mechanism disclosed in the JP 11-321368A, the concave portion (lever-coupling portion) of the automatic transmission-manipulating member configured to allow the manipulation member-coupling portion of the shift lever to be coupled thereto is formed in an opened structure. Thus, the concave portion is likely to undergo deformation when a force in a shift direction (front-rear direction) is applied from the manipulation member-coupling portion of the shift lever coupled thereto. The deformation of the concave portion leads to deterioration in efficiency of force transmission from the shift lever to the automatic transmission-manipulating member.

Moreover, in the mechanism disclosed in the JP 11-321368A, the manipulation member-coupling portion is provided on the right side of the lever shaft body of the shift lever in spaced-apart relation to the lever shaft body. Thus, when a force in the shift direction is applied to the manipulation member-coupling portion coupled to the concave portion, the extension piece is likely to undergo distortion due to a moment applied thereto. The distortion of the extension piece leads to deterioration in efficiency of force transmission from the shift lever to the automatic transmission-manipulating member.

It is an object of the present invention to provide an automatic transmission shifter capable of efficiently transmitting a force from a shift lever to an automatic transmission-manipulating member.

### SUMMARY OF THE INVENTION

In order to achieve the above object, the present invention provides an automatic transmission shifter which comprises an automatic transmission-manipulating member coupled to an automatic transmission, and a shift lever having a manipulating member-coupling portion capable of being coupled and decoupled with respect to the automatic transmission-manipulating member, wherein the automatic transmission-manipulating member comprises a receiving section movably receiving therein the manipulating member-coupling portion, and wherein the receiving section has a peripheral wall formed to surround the manipulating member-coupling portion around an entire circumference thereof, and wherein an inner periphery of the peripheral wall comprises a lever-coupling portion configured to be coupled and decoupled with respect to the manipulating member-coupling portion.

The automatic transmission of the present invention makes it possible to efficiently transmit a force from the shift lever to the automatic transmission-manipulating member.

### BRIEF DESCRIPTION OF THE DRAWINGS

FIG. 1 is a perspective view of an automatic transmission shifter according to one embodiment of the present invention.
FIG. 2 is a top plan view of the automatic transmission shifter in FIG. 1.
FIG. 3 is a sectional view taken along the line III-III in FIG. 2.
FIG. 4 is a partially-sectional perspective view of the automatic transmission shifter in FIG. 1.
FIG. 5 is a perspective view of a shift lever in the automatic transmission shifter in FIG. 1.
FIG. 6 is a perspective view of an automatic transmission-manipulating member in the automatic transmission shifter in FIG. 1.
FIG. 7 is a perspective view of the automatic transmission-manipulating member and the shift lever, wherein a manipulation member-coupling portion of the shift lever is coupled to a lever-coupling portion of the automatic transmission-manipulating member.
FIG. 8 is a top plan view of the automatic transmission-manipulating member and the shift lever in FIG. 7.

### DESCRIPTION OF EMBODIMENTS

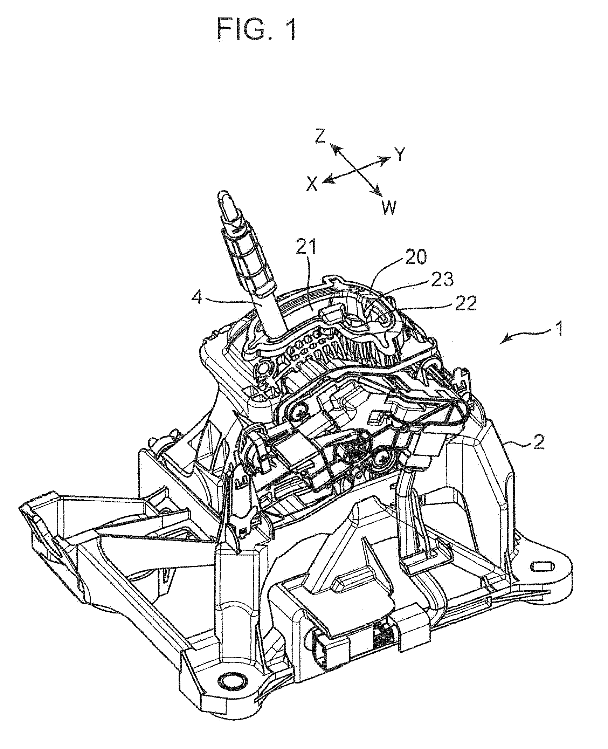

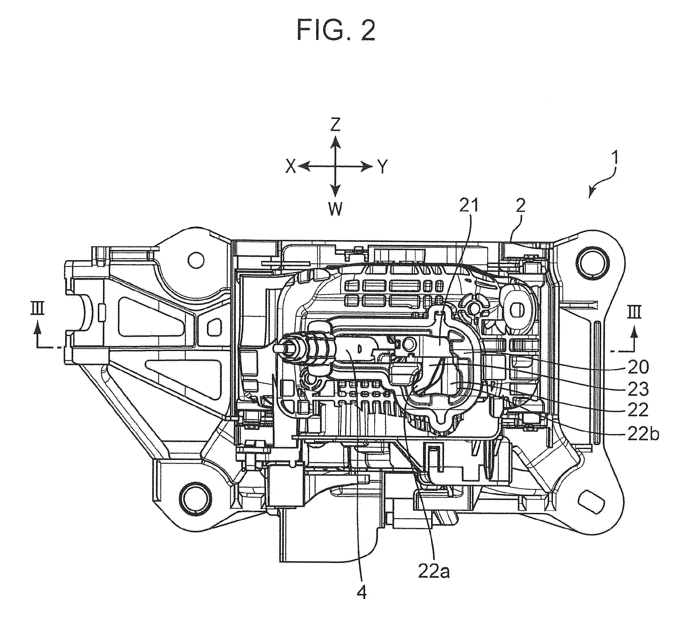

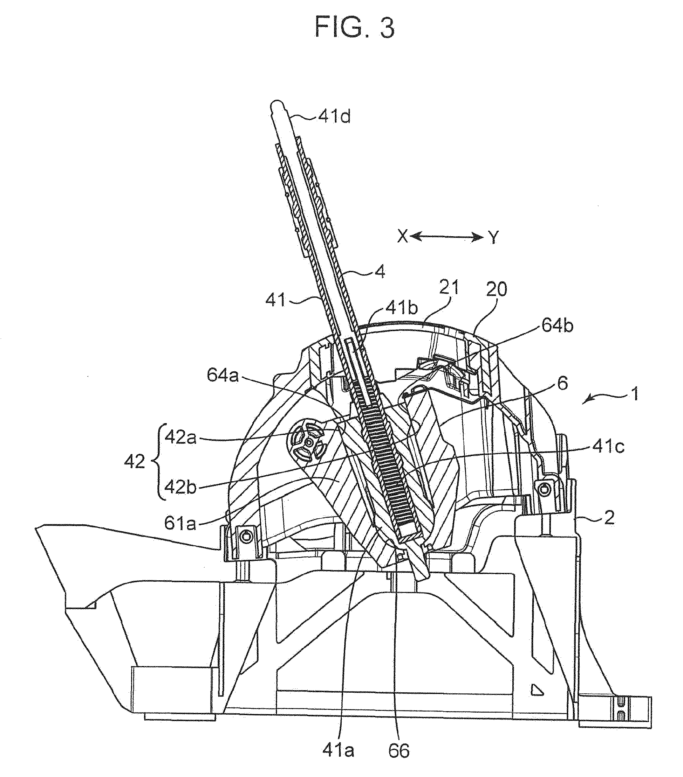

With reference to the drawings, the present invention will now be described in detail, based on an embodiment thereof. FIG. 1 and FIG. 2 are, respectively, a perspective view and a top plan view of an automatic transmission shifter according to one embodiment of the present invention, and FIG. 3 is a sectional view taken along the line III-III in FIG. 2, wherein the direction X and the direction Y indicate a front direction and a rear direction, respectively, and the direction Z and the direction W indicate a right direction and a left direction, respectively.

The automatic transmission shifter 1 according to this embodiment is designed for an automotive vehicle, and comprises: a shifter body 2 configured to be fixed to a vehicle body; an automatic transmission-manipulating member 6 (illustrated in FIG. 3), and a shift lever 4, as illustrated in FIGS. 1 to 3.

The shifter body 2 has a gate 21 to 23 formed in a top wall 20 thereof to penetrate between an upper surface and a lower surface thereof.

The gate in this embodiment comprises an automatic-shift-mode gate 21, a manual-shift-mode gate 22, and a communication passage 23 provided between the automatic-shift-mode gate 21 and the manual-shift-mode gate 22 to communicate therebetween.

The automatic-shift-mode gate 21 is configured to allow the shift lever 4 to be moved therealong in an automatic shift mode. The automatic-shift-mode gate 21 is provided to linearly extend in a front-rear direction (shift direction).

The manual-shift-mode gate 22 is provided on a left side of the automatic-shift-mode gate 21 and parallel to the automatic-shift-mode gate 21.

Although not illustrated, a cover is provided on an upper surface of the top wall 20 in such a manner as to be superimposed thereon from thereabove. This cover is composed of a plate-like member having a set of gate-equivalent holes each having approximately the same shape as a respective one of the gates 21 to 23 of the top wall 20. The cover has an indication area indicating various ranges set for the automatic-shift-mode gate, beside the automatic-shift-mode gate-equivalent holes.

Specifically, alphabets "P", "R", "N" and "D" are indicated on the indication area at respective positions corresponding to "parking range", "reverse range" "neutral range" and "drive range, which are set for the automatic-shift-mode gate in this order in a front-to-rear direction.

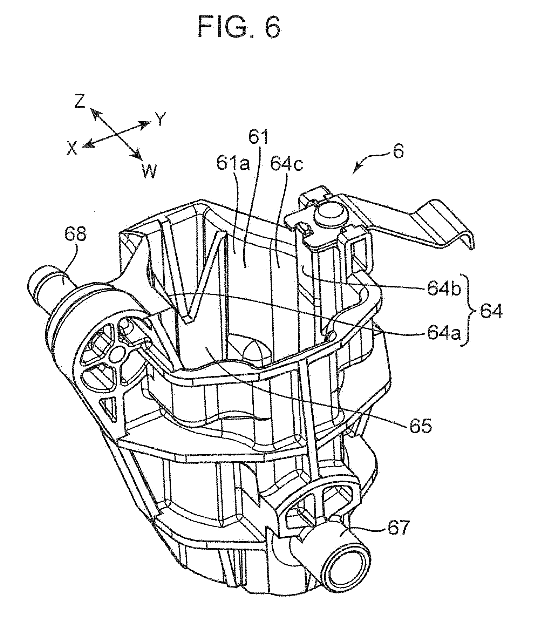

In this embodiment, as illustrated in FIGS. 6 to 8, the automatic transmission-manipulating member 6 comprises a receiving section 61 which receives therein an aftermentioned manipulating member-coupling portion 42 of the shift lever 4.

The receiving section 61 has a peripheral wall 61 a opened upwardly. The peripheral wall 61a has an upper portion formed to surround the aftermentioned manipulating member-coupling portion 42 around the entire circumference thereof, and an inner periphery of the upper portion comprises a lever-coupling portion 64 configured to be coupled and decoupled with respect to the aftermentioned manipulating member-coupling portion 42 of the shift lever 4, and a lever loose-fitting portion 65 configured to allow the aftermentioned manipulating member-coupling portion 42 to be loosely fitted thereinto.

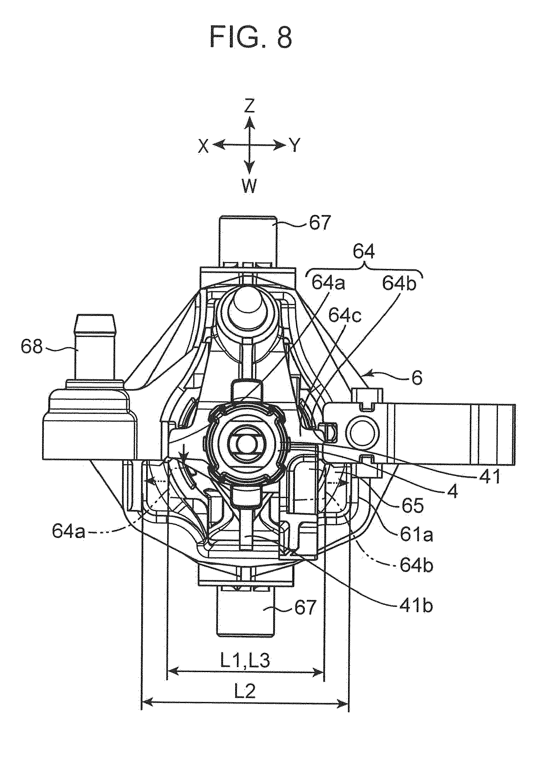

The lever-coupling portion 64 comprises a first lever-coupling sub-portion 64a and a second lever-coupling sub-portion 64b which are opposed to each other in the shift direction. The first lever-coupling sub-portion 64a and the second lever-coupling sub-portion 64b are formed to be located in opposed and spaced-apart relation to each other in the shift direction by a distance L1 (illustrated in FIG. 8), thereby defining therebetween a lever fit-insertion portion (space) 64c for allowing the aftermentioned manipulating member-coupling portion 42 to be fittingly inserted thereinto.

The lever loose-fitting portion 65 is formed to be communicated with the lever fit-insertion portion 64c. The lever loose-fitting portion 65 is formed on a left side of the lever-coupling portion 64 (on one side of the lever-coupling portion 64 in a right-left direction (select direction)). The aftermentioned manipulating member-coupling portion 42 is configured to be movable between the lever coupling portion 64 and the lever loose-fitting portion 65.

The lever loose-fitting portion 65 is formed such that an interspace distance L2 thereof in the shift direction is greater than the distance L1 of the lever fit-insertion portion 64c so as to allow the aftermentioned manipulating member-coupling portion 42 to be moved in the shift direction (when it is loosely fitted therein).

As illustrated in FIG. 3, the peripheral wall 61a has a lower portion formed in a shape which gradually shrinks downwardly, and comprises a hemispherical-shaped lever holding portion 66 provided in an inner periphery of an lower end thereof and configured to swingably hold the shift lever 4.

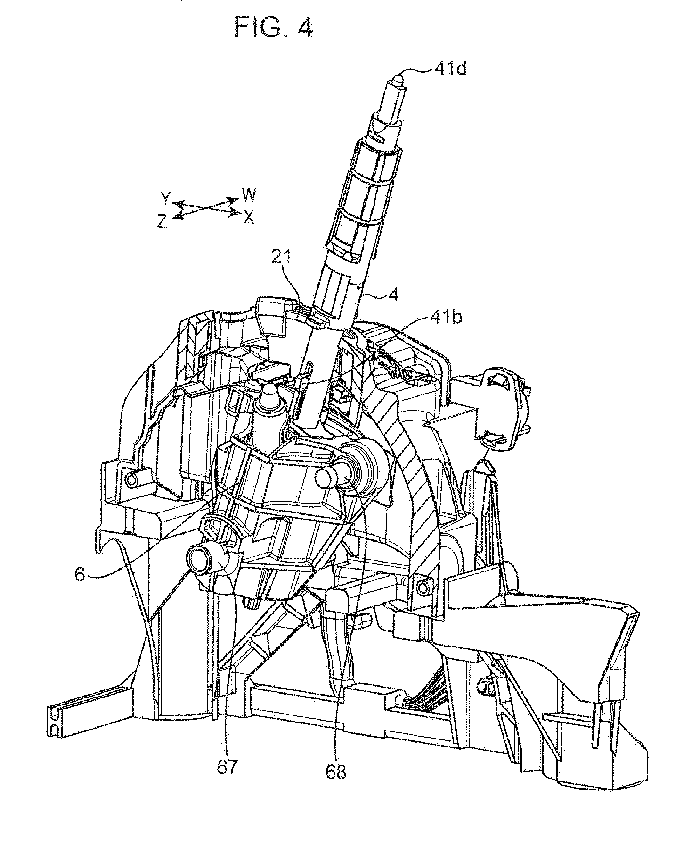

As illustrated in FIGS. 4, 6 and 7, the automatic transmission-manipulating member 6 has a pair of pivot shafts 67 provided, respectively, on right and left sides of the lower end to protrude outwardly from an outer peripheral surface of the lower end.

The automatic transmission-manipulating member 6 further comprises an automatic transmission-coupling portion 68 provided on an outer periphery of the upper portion of the peripheral wall 61a, and a non-illustrated automatic transmission provided in the vehicle is coupled to the automatic transmission-coupling portion 68 via a non-illustrated coupling member.

The automatic transmission-manipulating member 6 formed as above is provided inside the shifter body 2 in such a manner that the pivot shafts 67 are pivotally supported by the shifter body 2 in a swingable manner in the shift direction. Thus, the automatic transmission-manipulating member 6 is swingably moved with respect to the shifter body 2 in the shift direction about the pivot shafts 67 to manipulate the automatic transmission.

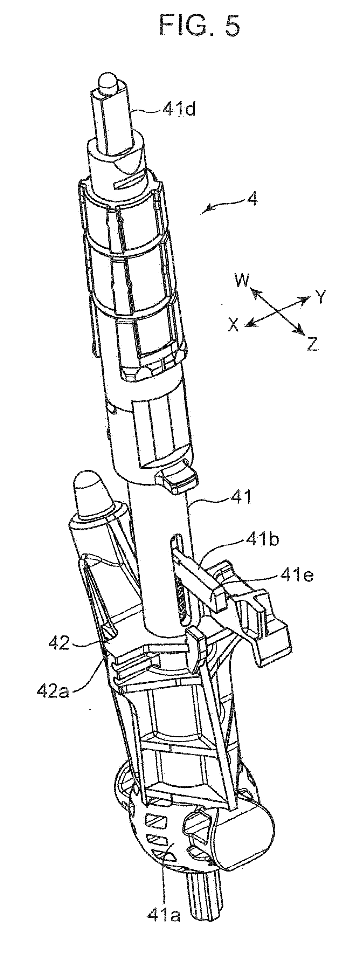

As illustrated in FIG. 5, the shift lever 4 comprises a lever shaft body 41, and a manipulating member-coupling portion 42 capable of being coupled and decoupled with respect to the automatic transmission-manipulating member 6. The lever shaft body 41 has an upper (in FIG. 5) distal end to which a non-illustrated operating grip member is attached. A driver or the like can manually grip and operate the attached operating grip member to manually operate the lever shaft body 41.

The lever shaft body 41 has a lower (in FIG. 5) base end formed as a spherical-shaped portion 41a made of a synthetic resin.

The lever shaft body 41 in this embodiment is provided with a range-locking protrusion piece 41b in an approximately central region thereof in an up-down direction. The range-locking protrusion piece 41b is provided as a means to allow the lever shaft body 41 to be releasably locked in each of the ranges of the automatic-shift-mode gate 21 in the shifter body 2. The range-locking protrusion piece 41b has a protruding portion 41e protruding leftwardly from an outer periphery of the lever shaft body 41.

The range-locking protrusion piece 41b is biased upwardly by a coil spring 41c provided inside the lever shaft body 41. According to a biasing force of the coil spring 41c, the range-locking protrusion piece 41b is entered into and locked in one of a plurality of non-illustrated locking recess provided in the shifter body 2 correspondingly to a desired one of the ranges. Then, when a pushing operation member 41d provided at an upper end of the lever shaft body 41 is manually pushed downwardly against the biasing force of the coil spring 41c, the range-locking protrusion piece 41b is moved out of the locking recess to allow the lever shaft body 41 to be moved along the automatic-shift-mode gate 21.

The manipulating member-coupling portion 42 comprises a first manipulation member-coupling sub-portion 42a configured to be coupled and decoupled with respect to the first lever-coupling sub-portion 64a, and a second manipulation member-coupling sub-portion 42b configured to be coupled and decoupled with respect to the second lever-coupling sub-portion 64b.

The first manipulation member-coupling sub-portion 42a is formed to protrude forwardly from the outer periphery of the lever shaft body 41.

The second manipulation member-coupling sub-portion 42b is formed behind the lever shaft body 41, i.e., on a side opposite to the first manipulation member-coupling sub-portion 42a across the lever shaft body 41, to protrude rearwardly from the outer periphery of the lever shaft body 41.

As illustrated in FIG. 8, a distance L3 between the first manipulation member-coupling sub-portion 42a and the second manipulation member-coupling sub-portion 42b is set to be approximately equal to the distance L1 between the first lever-coupling sub-portion 64a and the second lever-coupling sub-portion 64b, so as to allow the manipulating member-coupling portion 42 to be fittingly inserted into the lever fit-insertion portion 64c approximately without any gap.

Further, the distance L3 is less than the interspace distance L2 of the lever loose-fitting portion 65, so that the manipulating member-coupling portion 42 can be moved within the lever loose-fitting portion 65 in the shift direction.

As illustrated in FIG. 3, the shift lever 4 configured as above is inserted into the receiving section 61 of the automatic transmission-manipulating member 6 from thereabove, and held with respect to the lever holding portion 66 in a swingable manner in the shift and select directions.

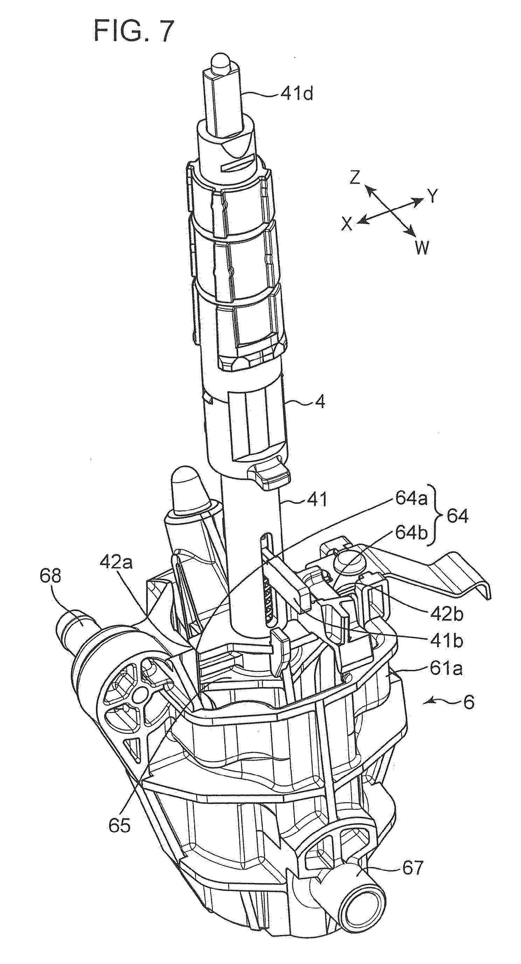

An operation of the shifter according to the above embodiment will be described below. In a state in which the lever shaft body 41 of the shift lever 4 is set in a parking range position of the automatic-shift-mode gate 21 (see FIG. 1), the manipulating member-coupling portion 42 of the shift lever 4 is fittingly inserted in the lever fit-insertion portion 64c of the automatic transmission-manipulating member 6, and the first manipulation member-coupling sub-portion 42a and the second manipulation member-coupling sub-portion 42b of the manipulating member-coupling portion 42 are coupled, respectively, to the first lever-coupling sub-portion 64a and the second lever-coupling sub-portion 64b of the lever-coupling portion 64 (see FIGS. 7 and 8).

Then, when the lever shaft body 41 of the shift lever 4 is moved rearwardly from the parking range position to a reverse range position or further to a neutral range position or a drive range position, in the automatic-shift-mode gate 21, the second lever-coupling sub-portion 64b is pushed rearwardly by the second manipulation member-coupling sub-portion 42b. Thus, the automatic transmission-manipulating member 6 is swingingly moved rearwardly about the pivot shafts 67 together with the shift lever 4 to pull the coupling member, thereby shifting the automatic transmission to a reverse state, a neutral state or a drive state.

The second lever-coupling sub-portion 64b is formed in the inner periphery of the peripheral wall 61 a formed to surround the manipulating member-coupling portion 42. Thus, during the above operation, even when the second lever-coupling sub-portion 64b is pushed rearwardly, the peripheral wall 61 a is less likely to undergo deformation. In addition, the second manipulation member-coupling sub-portion 42b is formed behind the lever shaft body 41, so that no moment is applied during push of the second lever-coupling sub-portion 64b.

Therefore, it becomes possible to efficiently transmit a force from the second manipulation member-coupling sub-portion 42b to the second lever-coupling sub-portion 64b.

On the other hand, when the lever shaft body 41 of the shift lever 4 is moved forwardly from the drive range position to the neutral range position, or further to the reverse range position or the parking range position, in the automatic-shift-mode gate 21, the first lever-coupling sub-portion 64a is pushed forwardly by the first manipulation member-coupling sub-portion 42a.

Thus, the automatic transmission-manipulating member 6 is swingingly moved forwardly about the pivot shafts 67 together with the shift lever 4 to push the coupling member, thereby shifting the automatic transmission to the neutral state, the reverse state or a parking state.

The first lever-coupling sub-portion 64a is formed in the inner periphery of the peripheral wall 61a formed to surround the manipulating member-coupling portion 42. Thus, during the above operation, even when the first lever-coupling sub-portion 64a is pushed forwardly, the peripheral wall 61 a is less likely to undergo deformation. In addition, the first manipulation member-coupling sub-portion 42a is formed in front of the lever shaft body 41, so that no moment is applied during push of the first lever-coupling sub-portion 64a.

Therefore, it becomes possible to efficiently transmit a force from the first manipulation member-coupling sub-portion 42a to the first lever-coupling sub-portion 64a.

Further, when the lever shaft body 41 of the shift lever 4 is moved leftwardly from the drive range position of the automatic-shift-mode gate 21 into the communication passage 23 and further into the manual-shift-mode gate 22, the manipulating member-coupling portion 42 is moved from the lever fit-insertion portion 64c to the lever loose-fitting portion 65 of the automatic transmission-manipulating member 6, so that the coupling between the manipulating member-coupling portion 42 and the lever-coupling portion 64 (64a, 64b) is released.

In this state, when the shift lever 4 is manually pushed in the shift direction, only the manipulating member-coupling portion 42 is moved in the shift direction within the lever loose-fitting portion 65, i.e., only the manipulating member-coupling portion 42 is moved with respect to the shifter body 2.

Therefore, even when the shift lever 4 is moved in the front-rear direction within the manual-shift-mode gate 22, the automatic transmission is maintained in the drive state, without interlock movement between the shift lever 4 and the automatic transmission-manipulating member 6.

In this embodiment, when the lever shaft body 41 is moved into the communication passage 23, a non-illustrated manual shift mode detection device installed in the shifter body 2 detects that the manual shift mode is selected. Then, when the lever shaft body 41 is moved forwardly to a minus gate 22a of the manual-shift-mode gate 22, a non-illustrated detection device installed in the shifter body 2 detects the movement, and a control unit provided on the shifter body 2 operates to perform a shift-down action once based on the detection result.

On the other hand, when the lever shaft body 41 is moved rearwardly to a plus gate 22b of the manual-shift-mode gate 22, the detection device detects the movement, and the control unit operates to perform a shift-up action once based on the detection result.

Subsequently, when the lever shaft body 41 of the shift lever 4 is returned from the manual-shift-mode gate 22 to the drive range of the automatic-shift-mode gate 21 through the communication passage 23, the manipulating member-coupling portion 42 of the shift lever 4 is re-fitted into the lever fit-insertion portion 64c from the lever loose-fitting portion 65 of the automatic transmission-manipulating member 6, so that the coupling between the shift lever 4 and the automatic transmission-manipulating member 6 is re-established.

### < Outline of Embodiment >

Last of all, features of the automatic transmission shifter disclosed in the above embodiment and functions/advantages based on the features will be outlined below.

The automatic transmission shifter according to the above embodiment comprises an automatic transmission-manipulating member coupled to an automatic transmission, and a shift lever having a manipulating member-coupling portion capable of being coupled and decoupled with respect to the automatic transmission-manipulating member, wherein the automatic transmission-manipulating member comprises a receiving section movably receiving therein the manipulating member-coupling portion, and wherein the receiving section has a peripheral wall formed to surround the manipulating member-coupling portion around an entire circumference thereof, and wherein an inner periphery of the peripheral wall comprises a lever-coupling portion configured to be coupled and decoupled with respect to the manipulating member-coupling portion.

In the automatic transmission shifter, in the peripheral wall formed to surround the manipulating member-coupling portion around the entire circumference thereof, the receiving section comprises a lever-coupling portion configured to be coupled and decoupled with respect to the manipulating member-coupling portion. Thus, even when a force is applied from the manipulating member-coupling portion of the shift lever to the receiving section, the receiving section becomes less likely to undergo deformation. This makes it possible to efficiently transmit a force from the shift lever to the automatic transmission-manipulating member.

In addition, the automatic transmission-manipulating member capable of efficiently receiving a force during operation of the shift lever can be improved in strength without particularly providing an extra strength-improving portion (e.g., a thick-walled portion) to increase rigidity in the shift direction.

Preferably, in the above automatic transmission shifter, the lever-coupling portion comprises a first lever-coupling sub-portion and a second lever-coupling sub-portion which are provided in opposed and spaced-apart relation to each other in a shift direction, and the shift lever further comprises a lever shaft body, wherein: the manipulating member-coupling portion is formed on both sides of the lever shaft body in the shift direction across the lever shaft body, in such a manner that it can be fittingly inserted into a lever fit-insertion portion defined between the first lever-coupling sub-portion and the second lever-coupling sub-portion and coupled to the first lever-coupling sub-portion and the second lever-coupling sub-portion; and the receiving section comprises a lever loose-fitting portion formed on one side of the lever fit-insertion portion in the select direction, wherein the lever loose-fitting portion is formed to be communicated with the lever fit-insertion portion so as to allow the manipulating member-coupling portion to be reciprocally move between the lever fit-insertion portion and the lever loose-fitting portion, and allow the manipulating member-coupling portion to be moved in the shift direction.

According to this feature, the manipulating member-coupling portion is formed on both sides of the lever shaft body in the shift direction across the lever shaft body. Thus, when a force in the shift direction is applied from the manipulating member-coupling portion to the first lever-coupling sub-portion or the second lever-coupling sub-portion, no moment is applied to the manipulating member-coupling portion, so that it becomes possible to reduce a risk of deformation of the manipulating member-coupling portion. This makes it possible to efficiently transmit a force from the shift lever to the automatic transmission-manipulating member in the shift direction.

This application is based on Japanese Patent application No. 2013-133597 filed in Japan Patent Office on June 26, 2013, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. An automatic transmission shifter (1) comprising an automatic transmission-manipulating member (6) coupled to an automatic transmission, and a shift lever (4) having a manipulating member-coupling portion (42) capable of being coupled and decoupled with respect to the automatic transmission-manipulating member (6), wherein the automatic transmission-manipulating member (6) comprises a receiving section (61) movably receiving therein the manipulating member-coupling portion (42), the receiving section (61) having a peripheral wall (61a) formed to surround the manipulating member-coupling portion (42) around an entire circumference thereof, and wherein an inner periphery of the peripheral wall (61a) comprises a lever-coupling portion (64) configured to be coupled and decoupled with respect to the manipulating member-coupling portion (42).

2. The automatic transmission shifter (1) as defined in claim 1, wherein
the lever-coupling portion (64) comprises a first lever-coupling sub-portion (64a) and a second lever-coupling sub-portion (64b) which are provided in opposed and spaced-apart relation to each other in a shift direction; and
the shift lever (4) further comprises a lever shaft body (41),
and wherein
the manipulating member-coupling portion (42) is formed on both sides of the lever shaft body (41) in the shift direction across the lever shaft body (41), in such a manner that it can be fittingly inserted into a lever fit-insertion portion (64c) defined between the first lever-coupling sub-portion (64a) and the second lever-coupling sub-portion (64b) and coupled to the first lever-coupling sub-portion (64a) and the second lever-coupling sub-portion (64b); and
the receiving section (61) comprises a lever loose-fitting portion (65) formed on one side of the lever fit-insertion portion (64c) in the select direction, the lever loose-fitting portion (65) being formed to be communicated with the lever fit-insertion portion (64c) so as to allow the manipulating member-coupling portion (42) to be reciprocally move between the lever fit-insertion portion (64c) and the lever loose-fitting portion (65), and allow the manipulating member-coupling portion (42) to be moved in the shift direction.
